# EUROPÄISCHE PATENTSCHRIFT

(11) **EP 1 584 134 B1**
(45) Veröffentlichungstag und Bekanntmachung des Hinweises auf die Patenterteilung: **22.03.2017**
(21) Anmeldenummer: 04701595.3
(22) Anmeldetag: 13.01.2004
(51) Int. Cl.: H02P 6/08, H02K 11/02

(54) **VERFAHREN ZUR VERRINGERUNG VON COMMON-MODE-STÖRSTRÖMEN IN EINEM ELEKTRISCHEN ANTRIEBSSYSTEM SOWIE ENTSPRECHENDES ELEKTRISCHES ANTRIEBSSYSTEM**
METHOD FOR REDUCING COMMON-MODE INTERFERENCE CURRENTS IN AN ELECTRIC DRIVE SYSTEM, AND CORRESPONDING ELECTRIC DRIVE SYSTEM
PROCEDE POUR REDUIRE LES COURANTS PARASITES EN MODE COMMUN DANS UN SYSTEME D'ENTRAINEMENT ELECTRIQUE, ET SYSTEME D'ENTRAINEMENT ELECTRIQUE CORRESPONDANT

(30) Priorität: 15.01.2003 DE 10301275
(43) Veröffentlichungstag der Anmeldung: 12.10.2005
(73) Patentinhaber: Siemens Aktiengesellschaft, 80333 München (DE)
(72) Erfinder: TÖLLE, Hans-Jürgen, 90419 Nürnberg (DE); VOGEL, Reinhard, 91074 Herzogenaurach (DE); WENGLER, Peter, 91058 Erlangen (DE)
(86) Internationale Anmeldenummer: PCT/EP2004/000166
(87) Internationale Veröffentlichungsnummer: WO 2004/064240

(56) Entgegenhaltungen:
- EP-A- 0 898 359
- DE-A- 10 043 934

## Beschreibung

Verfahren zur Verringerung von Common-Mode-Störströmen in einem elektrischen Antriebssystem sowie entsprechendes elektrisches Antriebssystem.

Die Erfindung bezieht sich auf ein Verfahren gemäß Oberbegriff des Patentanspruchs 1 bzw. ein elektrisches Antriebssystem gemäß Oberbegriff des Patentanspruchs 6; dabei wird von einem elektrischen Antriebssystem mit einer DC-Spannungsversorgungseinrichtung ausgegangen, wie es z.B. durch die EP 0 334 112 B1 bekannt ist.

Dem Stand der Technik entsprechend, ermöglichen von einer DC-Spannungsversorgungseinrichtung gespeiste Pulsumrichter den Betrieb einer Drehfeldmaschine, wie z.B. einer Synchronmaschine, mit variabler Frequenz und Spannung. Da sowohl die einzelnen Wicklungsstränge einer Drehfeldmaschine wie auch die DC-Spannungsversorgungseinrichtung nicht zu vernachlässigende parasitäre Ableitkapazitäten gegen Erdpotential ("Erdkapazitäten") aufweisen, entstehen durch die Schaltvorgänge der Halbleiterschalter der Pulsumrichter kapazitive Umladeströme, die dann in der DC-Spannungsversorgungseinrichtung als EMV-Störungen in Form von Common-Mode-Störströmen wirksam werden. Diese Störströme können zum einen andere Geräte stören, die mit der DC-Spannungsversorgungseinrichtung galvanisch verbunden sind ("Leitungsgebundene EMV-Störung"). Zum anderen führen sie zusätzlich noch zu einer z.T. erheblichen Abstrahlung von Funk-Störfeldern und können dann auch Geräte stören, die keine galvanische Verbindung zur DC-Spannungsversorgungseinrichtung haben ("Funk-EMV-Störung"). Daher sind im Allgemeinen strenge Grenzwerte für die zulässigen Common-Mode-Störströme vorgeschrieben.

Besonders strenge Grenzwerte gelten dabei bei solchen Anlagen und Systemen, bei denen einerseits große räumliche Ausdehnungen der DC-Spannungsversorgungseinrichtung, große räumliche Ausdehnung des galvanisch damit verbunden Leitungsnetzes und hohe elektrische Leistungen zusammentreffen mit andererseits engen räumlichen Verhältnissen, kleinen möglichen Abständen zu potentiell störgefährdeten Geräten mit anwendungsbedingt hoher elektrischer und elektromagnetischer Empfindlichkeit. Solche Randbedingungen treten z.B. bei Schiffen mit einer elektrischen Propulsions-Antriebsanlage auf, insbesondere bei U-Booten.

Drehfeldmaschinen großer Leistung, insbesondere Schiffsantriebsmotoren, werden, wie in der EP 0 334 112 B1 gezeigt, oftmals über mehrere Pulsumrichter aus einer gemeinsamen DC-Spannungsversorgungseinrichtung gespeist. Um hohe Ausgleichsströme in den Wicklungssträngen aufgrund gegenseitiger magnetischer Kopplung zu vermeiden, werden die Schaltvorgänge der einzelnen Pulsumrichter untereinander synchronisiert, d.h. sie finden nahezu gleichzeitig statt. Die Pulsumrichter werden deshalb mit im Wesentlich gleicher Schaltfrequenz getaktet. Durch die Gleichzeitigkeit der Schaltvorgänge in den einzelnen Pulsumrichtern addieren sich allerdings die aufgrund der Erdkapazitäten der Wicklungsstränge verursachten Lade- und Entladestromstöße der einzelnen Pulsumrichter und es fließt ein hoher Common-Mode-Störstrom in der Spannungsversorgungseinrichtung.

Zur Verringerung der durch die Pulsumrichterspeisung hervorgerufenen Common-Mode-Ströme und der daraus resultierenden Störungen sind verschiedene Verfahren bekannt. Sie zielen darauf ab, die für die Common-Mode-Störströme wirksamen Impedanzen zu vergrößern, indem diesem Ziel entsprechend geeignete, zusätzliche Induktivitäten an geeigneter Stelle eingefügt werden. So ist durch die DE 100 59 332 A1 bekannt, in alle zu einem Motor führenden Motoranschlussleitungen eine Impedanz transformatorisch einzukoppeln, indem z.B. alle Motoranschlussleitungen durch einen magnetisierbaren Koppelkern geführt werden. Solche Koppelkerne weisen jedoch insbesondere bei Antrieben großer Leistung erhebliches Gewicht und Volumen auf und ihr Einbau in eine Antriebsvorrichtung kann deshalb gerade bei beengten Platzverhältnissen problematisch sein. Außerdem kann diese Lösung einen beträchtlichen finanziellen Aufwand darstellen. Aus der DE 100 40 851 A1 ist bekannt, die wicklungstragenden Komponenten der elektrischen Maschine gegenüber dem Gehäuse zu isolieren und die wicklungstragenden Teile über eine Induktivität an die Gehäusemasse anzukoppeln. Diese zusätzlich erforderliche Induktivität liegt dann in Reihe zur parasitären Kapazität der Wicklungen gegen Erdpotential und erhöht damit ebenfalls die für die Common-Mode-Ströme maßgebliche Impedanz.

DE 100 43 934 A1 offenbart ein Steuerungsmodul für einen Brücken-Umrichter zur Kommutierung von Strömen für einen Elektromotor. Der Brücken-Umrichter weist zumindest drei durch einen Gleichspannungszwischenkreis versorgte Brückenzweige mit je einem oberen Schalter und einem unteren Schalter und je einem zwischen dem jeweiligen oberen und unteren Schalter angeordneten Abgriff zum Anlegen einer Ausgangspannung an jeweils eine Motorwicklung des Elektromotors auf. Das Steuerungsmodul steuert die Schalter mit Pulsgebermitteln zur Bildung von Schaltpulsen derart an, dass jeweils mindestens ein Brückenzweig inaktiv ist, während jeweils zwei weitere Brückenzweige paarweise aktiv sind und im Wesentlichen im Gegentakt arbeiten.

EP 0 898 359 A2 offenbart einen Wechselrichter mit mehreren Wechselrichterbrücken, deren Ausgangsspannungen über einen Transformator aufsummiert werden, welcher eine der Anzahl der Wechselrichterbrücken entsprechende Anzahl von Primärwicklungen und zugehörigen Sekundärwicklungen und einen über eine Erdverbindung geerdeten Mittelabgriff aufweist. Zur Dämpfung bzw. Unterdrückung von über die Erdverbindung fließenden gleichphasigen bzw. Gleichtakt-Störströmen innerhalb des Transformators sind die Sekundärwicklungen jeweils in eine erste und zweite gleichartige Teil-Sekundärwicklung aufgeteilt und die Teil-Sekundärwicklungen sind so untereinander und mit dem Mittelabgriff verbunden, dass sich die in den Teil-Sekundärwicklungen induzierten Gleichtaktspannungen gegenseitig aufheben.

In Anbetracht dieses Standes der Technik liegt der vorliegende Erfindung die Aufgabe zugrunde, ohne Verwendung zusätzlicher induktivitätsbehafteter Bauteile die Common-Mode-Störströme zu verringern und die mit der Verwendung von Zusatzinduktivitäten verbunden Kosten und Aufwendungen für Platzbedarf, Gewicht, Montage und Verdrahtung einzusparen.

Die Lösung dieser Aufgabe gelingt ausgehend von einem Verfahren gemäß Oberbegriff des Patentanspruchs 1 bzw. einem elektrischen Antriebssystem gemäß Oberbegriff des Patentanspruchs 5 durch die jeweils kennzeichnende Lehre. Vorteilhafte Ausgestaltungen des Verfahrens gemäß Patentanspruch 1 sind Gegenstand der Unteransprüche 2 bis 4; vorteilhafte Ausgestaltungen des elektrischen Antriebssystems gemäß Patentanspruch 5 sind Gegenstand der Unteransprüche 7 bis 14.

Durch das erfindungsgemäße Verfahren bzw. das erfindungsgemäße elektrische Antriebssystem wird erreicht, dass die von den beiden Pulsumrichtern erzeugten Common-Mode-Störströme über die parasitären Kapazitäten der Wicklungen gegen Erdpotential einander entgegengesetzt gerichtet sind und sich damit insbesondere in der DC-Spannungsversorgungseinrichtung weitgehend gegeneinander aufheben.

Durch die erfindungsgemäße Lösung bleiben die für die Antriebsfunktion der Drehfeldmaschine maßgeblichen Ausgangsspannungen der Pulsumrichter, d.h. die Differenzspannungen zwischen den Ausgangsklemmen bei jedem Umrichter, unverändert. Die Verringerung der Common-Mode-Störströme erfolgt allein durch entsprechende Ansteuerung der Pulsumrichter. Spezielle Bauteile, wie z.B. Zusatzinduktivitäten, werden nicht benötigt. Damit werden gegenüber einer Verwendung von Zusatzinduktivitäten Einsparungen bei Kosten und Aufwendungen für Platzbedarf, Gewicht, Montage und Verdrahtung erreicht.

Die erfindungsgemäße Lösung und deren Ausgestaltungen sind gleichermaßen geeignet für Drehfeldmaschinen mit Einzelstrangspeisung über einphasige Umrichter, wie auch für Maschinen mit mehrphasigen, z.B. dreiphasigen Wicklungssystemen und Speisung über mehrphasige Umrichter.

Die von den je zwei, aus der selben DC-Spannungsversorgungseinrichtung gespeisten Pulsumrichtern erzeugten Common-Mode-Störströme heben sich dann besonders gut auf, wenn sie bei einander entgegengesetzter Richtung annähernd gleichen zeitlichen Verlauf und Amplitude aufweisen. Im Fall einer Drehfeldmaschine mit mehreren, im Sinne einer Einzelstrangspeisung von je einem einphasigen Pulsumrichter gespeisten Wicklungssträngen und unter der Annahme gleich großer parasitären Wicklungskapazitäten der einzelnen Wicklungsstränge kann dies dadurch erreicht werden, dass die je zwei Pulsumrichter durch die Steuervorrichtung derart angesteuert werden, dass die Momentanwerte der Ausgangsspannungen der je zwei Pulsumrichter zumindest annähernd gleich sind. Im Fall einer Drehfeldmaschine mit mehreren, von je einem mehrphasigen Pulsumrichter gespeisten Wicklungssystemen kann dies dadurch erreicht werden, dass die von den je zwei Pulsumrichtern gespeisten Wicklungssysteme zumindest annähernd um 180° elektrisch gegeneinander versetzt in der Drehfeldmaschine angeordnet werden und die je zwei Pulsumrichter durch die Steuervorrichtung derart angesteuert werden, dass die Momentanwerte der Ausgangsspannungen der je zwei Pulsumrichter zueinander invers sind.

Treten Unterschiede in den Momentanwerten der Aussteuerung und damit Unterschiede in den Schaltzeitpunkten und den Ausgangsspannungen der beiden Pulsumrichter auf, wie das z.B. bei unterschiedlichen Grundschwingungsphasenlagen in den verschiedenen Wicklungssträngen einer Drehfeldmaschinen der Fall ist, verbleiben Reste im resultierenden Common-Mode-Störstrom. Es ist deshalb besonders vorteilhaft, die Pulsumrichterpaare vorzugsweise nach diesem Kriterium zusammenzustellen, d.h. sie z.B. gleichen oder nahe beieinander liegenden Grundschwingungsphasenlagen der Ausgangsspannungen zuzuordnen. Bei Drehfeldmaschinen mit einer hohen Anzahl von Wicklungssträngen bzw. -phasen, wie sie z.B. bei Propellerantrieben in U-Booten eingesetzt werden, sind diese Verhältnisse gegeben.

Messungen an einem der erfindungsgemäßen Lösung entsprechend ausgeführtem Antriebssystem mit Einzelstrangspeisung der Maschinenwicklungen über Pulsumrichter haben gezeigt, dass sich die Common-Mode-Störströme durch die erfindungsgemäße Ausführung des Antriebs, speziell der erfindungsgemäßen Ansteuerung der Pulsumrichter, um mehr als den Faktor 10, d.h. um mehr als 20 dB reduzieren lassen.

Hinsichtlich der Erzeugung der Ansteuerimpulse ergeben sich für eine Realisierung der erfindungsgemäßen Lösung keine Einschränkungen, so dass die Ansteuerung bzw. Modulation der Pulsumrichter in vorteilhafter Weise sowohl mit online-arbeitenden Modulationsverfahren (z.B. Sinus-Dreieck-Modulation, Raumzeigermodulation usw.) als auch mit offline arbeitenden Modulationsverfahren. z.B. offline-berechneten Pulsmustern, erfolgen kann.

Eine besonders einfache, anschauliche und vorteilhafte Ausgestaltung der erfindungsgemäßen Lösung ergibt sich bei Verwendung einer Modulation mit Hilfe einer Dreieck-Hilfsfunktion im Sinne einer Sinus-Dreieck-Modulation, wobei die Dreieck-Hilfsfunktion des einen der je zwei Pulsumrichter gegenüber der Dreieck-Hilfsfunktion des anderen der je zwei Pulsumrichter invertiert ist. Die Verwendung dieser Modulation ist insbesondere deshalb vorteilhaft, weil sie in besonders vorteilhafter Ausgestaltung mit Hilfe eines programmierbaren Hardwarebaustein, insbesondere LCA, erfolgen kann; oder wenn dies nicht möglich ist oder nicht gewünscht wird, in vorteilhafter Weise auch mit herkömmlicher Hardware in Analog- und/oder Digitaltechnik realisiert werden kann.

Eine gute Synchronisation der Ansteuerimpulse der je zwei aus einer gemeinsamen DC-Spannungsversorgungseinrichtung gespeisten Pulsumrichter kann dadurch gewährleistet werden, dassieine gemeinsame Steuervorrichtung für die jeweils je zwei Pulsumrichter vorgesehen ist.

Ist es aus baulichen oder anderen Gründen nicht möglich, dass beide aus einer gemeinsamen DC-Spannungsversorgungseinrichtung gespeisten Pulsumrichter ihre Ansteuerimpulse aus einer gemeinsamen Steuervorrichtung erhalten, so ergibt sich eine weitere vorteilhafte Ausgestaltung der Erfindung dadurch, dass mehrere, insbesondere zwei, gerätetechnisch und/oder funktionell getrennte und in geeigneter Weise signaltechnisch miteinander verknüpfte, insbesondere miteinander synchronisierte, Ansteuervorrichtungen für die jeweils je zwei Pulsumrichter vorgesehen sind.

In einer vorteilhaften Ausgestaltung des erfindungsgemäßen elektrischen Antriebssystems weist die DC-Spannungsversorgungseinrichtung und/oder zu der DC-Spannungsversorgungseinrichtung gehörende strom- und spannungsführende elektrische Leiter und/oder zu der DC-Spannungsversorgungseinrichtung gehörende DC-Spannungsquellen eine große räumliche Ausdehnung und/oder Verteilung auf und ermöglicht damit die Speisung räumlich entfernter Antriebskomponenten bei gleichzeitig geringen Common-Mode-Störströmen.

Das erfindungsgemäße elektrische Antriebssystem kann in besonders vorteilhafter Weise in einem elektrischen Bordnetz, insbesondere einem elektrischen DC-Bordnetz auf Schiffen, insbesondere auf U-Booten verwendet werden, da bei solchen Bordnetzen besonders hohe Anforderungen an die Common-Mode-Störströme bestehen.

Das erfindungsgemäße elektrische Antriebssystem kann mit einer oder mehreren elektrischen Drehfeldmaschinen ausgeführt sein, die als Synchronmaschinen mit elektrischer oder permanentmagnetischer Erregung oder als Asynchronmaschinen ausgeführt sind.

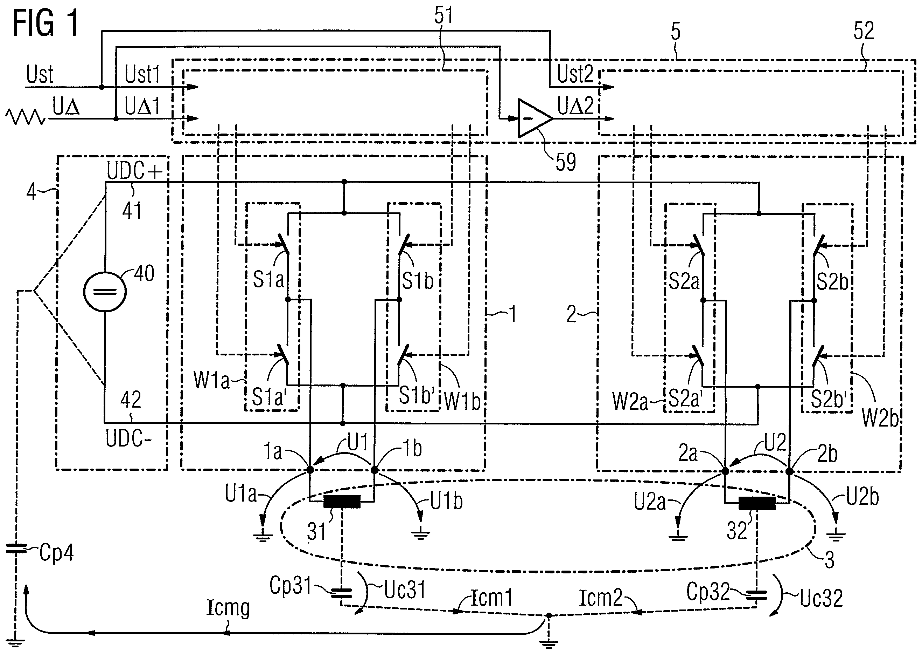

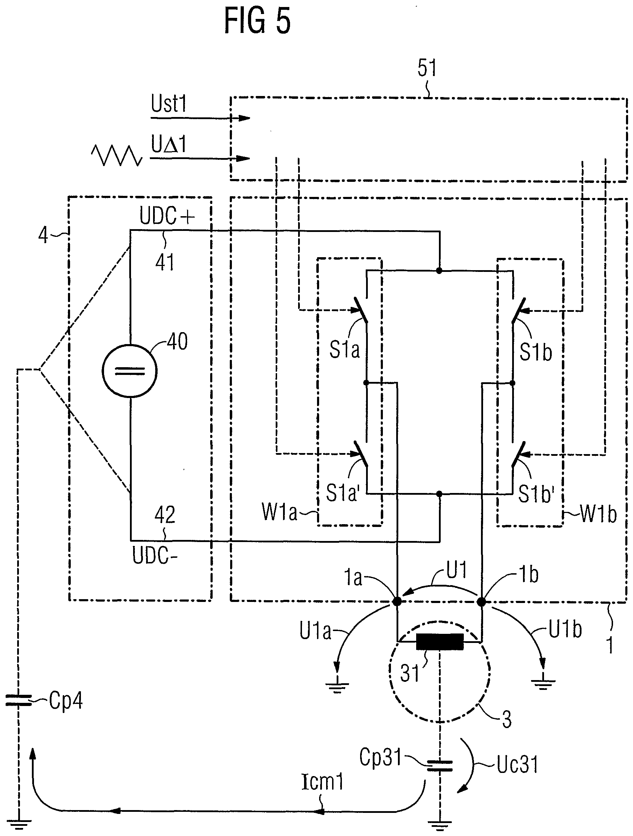

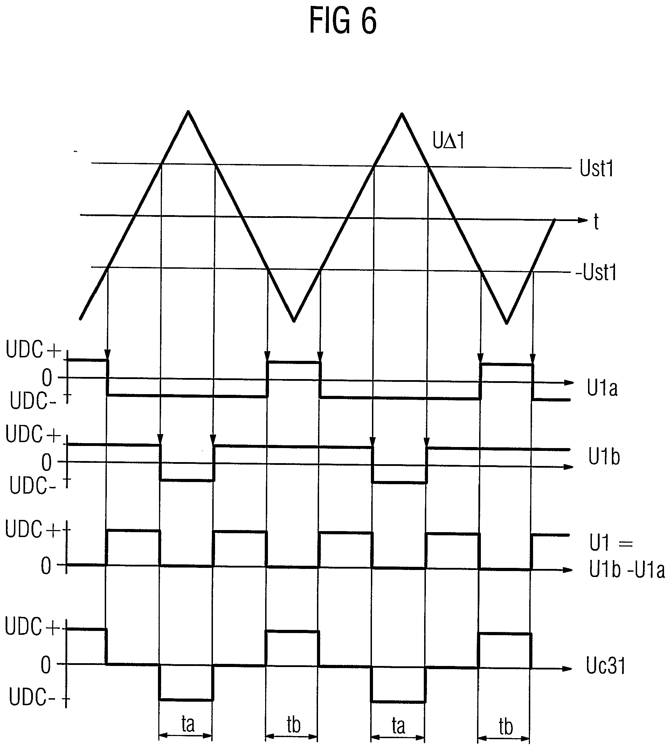

Die Erfindung, sowie weitere vorteilhafte Ausgestaltungen der Erfindung gemäß Merkmalen der Unteransprüche, werden im Folgenden anhand von Ausführungsbeispielen in den Figuren 1 bis 4 näher erläutert; die der Erfindung zugrunde liegende Problematik ist anhand der Figuren 5 und 6 dargelegt. Zum besseren Verständnis der erfindungsgemäßen Lösung werden in den Figuren vereinfachte Darstellungen verwendet. Als Beispiel für ein geeignetes Modulations- bzw. Ansteuerverfahren wird eine Bildung der Ansteuersignale mittels einer Dreieck-Hilfsfunktion im Sinne der Sinus-Dreieck-Modulation dargestellt. Die in den Figuren verwendeten Vereinfachungen betreffen auch die für die Ausbildung der Common-Mode-Ströme maßgeblichen parasitären Kapazitäten gegen Erdpotential, die vereinfachend in Form konzentrierter, kapazitiver Schaltungselemente, d.h in Form von Kondensatoren dargestellt werden. Die in den Figuren dargestellten Ausführungsbeispiele und dazugehörenden Erläuterungen dienen somit lediglich der Erläuterung der Erfindung und sind für diese nicht beschränkend. Es zeigen:
- FIG 1: eine vereinfachte Darstellung einer Schaltung zur Speisung von zwei Wicklungssträngen einer Drehfeldmaschine über zwei einphasige Pulsumrichter aus einer gemeinsamen DC-Spannungsversorgungseinrichtung;
- FIG 2: mit Bezug auf FIG 1 Zeitdiagramme des Verlaufs der Pulsumrichter-Ausgangsspannungen, wobei entsprechend der erfindungsgemäßen Lösung beide Umrichter so angesteuert werden, dass sich die von beiden Umrichtern erzeugten Common-Mode-Störströme über die parasitären Kapazitäten des Wicklungsstränge gegenüber Erdpotential gegeneinander aufheben;
- FIG 3: eine vereinfachte Darstellung einer Schaltung zur Speisung von zwei dreisträngigen Wicklungssystemen einer Drehfeldmaschine über zwei dreiphasige Pulsumrichter aus einer gemeinsamen DC-Spannungsversorgungseinrichtung ;
- FIG 4: mit Bezug auf FIG 3 Zeitdiagramme des Verlaufs der Pulsumrichter-Ausgangsspannungen, wobei entsprechend der erfindungsgemäßen Lösung beide Umrichter so angesteuert werden, dass sich die von beiden Umrichtern erzeugten Common-Mode-Störströme über die parasitären Kapazitäten der Wicklungssysteme gegenüber Erdpotential gegeneinander aufheben;
- FIG 5: eine vereinfachte Darstellung einer Schaltung zur Speisung eines Wicklungsstranges einer Drehfeldmaschine über einen einphasigen Pulsumrichter aus einer DC-Spannungsversorgungseinrichtung;
- FIG 6: mit Bezug auf FIG 5 Zeitdiagramme des Verlaufs der Umrichter-Ausgangsspannungen, die für die Entstehung des Common-Mode-Störstromes über die parasitären Kapazität des Wicklungsstranges gegenüber Erdpotential maßgeblich sind.

Anhand FIG 5 und 6 soll zunächst die der Erfindung zugrunde liegende Problematik erläutert werden. Die Prinzipskizze von FIG 5 zeigt einen Wicklungsstrang 31 einer Drehfeldmaschine 3, der über einen Pulsumrichter 1 von einer DC-Spannungsversorgungseinrichtung 4 gespeist wird. Zur Spannungsversorgungseinrichtung 4 gehören die DC-Spannungsquelle 40 und die strom- und spannungsführenden Leiter 41 mit positivem Potential UDC+ und 42 mit negativem Potential UDC-, über die die Zuführung der elektrischen Energie zu dem Pulsumrichter 1 erfolgt.

Der einphasige Pulsumrichter 1 in FIG 5 weist zwei Halbbrücken W1a bzw. W1b mit jeweils zwei Schaltern S1a,S1a' bzw. S1b,S1b' auf. Mittels einer geeigneten Ansteuervorrichtung 51 werden die Schalter S1a,S1a' und S1b,S1b' so angesteuert, dass sich an den Ausgangsklemmen 1a und 1b des Pulsumrichters 1 und damit am dort angeschlossenen Wicklungsstrang 31 der Drehfeldmaschine 3 eine gewünschte Spannung U1 einstellt. Die Pulsumrichter-Ausgangsspannung U1 ensteht dabei als Differenzspannung der Ausgangspotentiale U1a und U1b der beiden Halbbrücken W1a und W1b. Die parasitäre Kapazität des Wicklungsstranges 31 gegenüber Erdpotential ist vereinfachend durch den Kondensator Cp31 dargestellt. Der Kondensator Cp4 repräsentiert in vereinfachender Weise die parasitäre Kapazität der DC-Spannungsversorgungseinrichtung 4 gegen Erdpotential. Die Spannung Uc31 bezeichnet den Spannungsabfall über der parasitären Kapazität Cp31 des Wicklungsstranges 31 gegenüber Erdpotential.

In FIG 6 sind für die in FIG 5 gezeigte Schaltung die Zeitverläufe der maßgeblichen Pulsumrichter-Ausgangsspannungen dargestellt. Die Ansteuerung der Schalter S1a,S1a' und S1b,S1b' erfolgt dabei in beispielhafter Weise unter Zuhilfenahme einer Dreieck-Hilfsfunktion UΔ1 im Sinne der bekannten Sinus-Dreieck-Modulation. Dabei werden in bekannter Weise in der Ansteuervorrichtung 51 eine Dreieck-Hilfsfunktion UΔ1 mit einer die Pulsumrichteraussteuerung bestimmenden Steuerspannung Ust1 und -Ust1 verglichen, um daraus die Schaltzeitpunkte für die Schalter S1a,S1a' und S1b,S1b' zu ermitteln.

Wie aus FIG 5 und FIG 6 weiterhin anhand des Zeitverlaufes der Spannung Uc31 über der parasitären Kapazität Cp31 zu entnehmen ist, ändert sich diese Spannung Uc31 periodisch in Abhängigkeit der Ausgangspotentiale U1a und U1b. So befindet sich z.B. in den Zeitabschnitten ta der gesamte Wicklungsstrang 31 auf negativem Potential UDC- der DC-Spannungsversorgungseinrichtung und in den Zeitabschnitten tb auf positivem Potential UDC+ der DC-Spannungsversorgungseinrichtung. Damit verbunden ist ein periodisches, vom Zeitverlauf der Spannung Uc31 abhängiges Umladen der Erdkapazität Cp31 mit entsprechenden Lade- bzw. Umladeströmen Icm1. Bei jeder durch den Pulsumrichter 1 hervorgerufenen Spannungsänderung von Uc31 fließt demnach über Cp31 ein Störstrom Icm1, dessen Stromkreis sich über Erde und die parasitäre Kapazität Cp4 zurück zur DC-Spannungsversorgungseinrichtung 4 schließt und dort als Common-Mode-Störstrom wirksam wird.

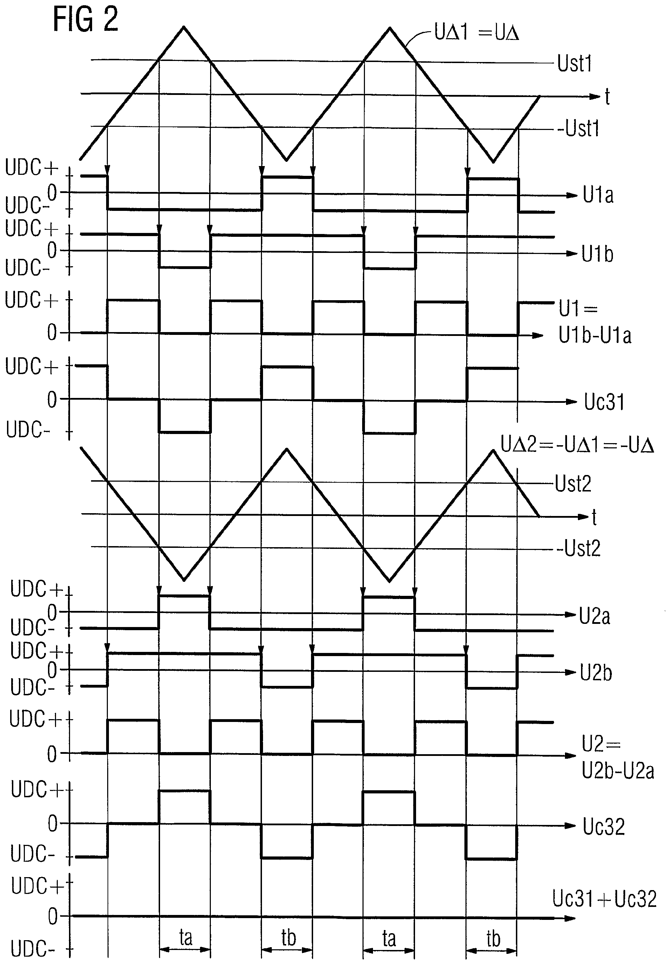

Anhand FIG 1 und 2 soll nun die erfindungsgemäße Verringerung der Common-Mode-Störströme am Beispiel eines elektrischen Antriebssystems mit einer Einzelstrangspeisung einer Drehfeldmaschine über einphasige Pulsumrichter erläutert werden. FIG 1 zeigt in vereinfachter Darstellung eine elektrische Drehfeldmaschine 3 mit zwei Wicklungssträngen 31, 32, die über je einen einphasigen Pulsumrichter 1, 2 von einer gemeinsamen DC-Spannungsversorgungseinrichtung 4 gespeist werden. Beide Pulsumrichter 1, 2 werden mit der gleichen Aussteuerung betrieben und erzeugen an ihren Ausgangsklemmen 1a, 1b bzw. 2a, 2b zumindest annähernd die gleichen Ausgangsspannungen U1 und U2.

Wie FIG 1 zeigt, haben die Pulsumrichter 1 und 2 jeweils die gleiche Prinzipschaltung, die der des Pulsumrichters 1 von FIG 5 entspricht. Jeder der Pulsumrichter 1, 2 weist hierbei, entsprechend des Pulsumrichters 1 von FIG 5, je zwei Halbbrücken W1a, W1b bzw. W2a, W2b mit jeweils zwei Schaltern (S1a,S1a' und S1b,S1b' bzw. S2a,S2a' und S2b,S2b') auf. Um hohe Ausgleichsströme zwischen den einzelnen, über die jeweiligen Pulsumrichter 1, 2 gespeisten, Wicklungsstränge 31, 32 zu vermeiden, werden die Pulsumrichter 1, 2 mit im Wesentlichen gleicher Schaltfrequenz getaktet, so dass die Schaltvorgänge in den Pulsumrichtern 1, 2 nahezu gleichzeitig stattfinden. Bezüglich der weiteren Beschreibung von Schaltung und Funktion des Pulsumrichters 2 sei auf die Beschreibung von Pulsumrichter 1 von FIG 5 verwiesen; die Bezugszeichen sind funktions- und sinnentsprechend angepasst.

Der Pulsumrichter 1 erzeugt -wie bereits beschrieben- auf Grund seiner Schalthandlungen und der damit verbundenen Änderungen seiner Ausgangspotentiale U1a, U1b an der Erdkapazität Cp31 des von ihm gespeisten Wicklungsstrangs 31 einen Spannungsabfall Uc31 und damit einen Common-Mode-Störstrom Icm1 in der DC-Spannungsversorgungseinrichtung 4. Entsprechend verursacht der Pulsumrichter 2 aufgrund seiner Schalthandlungen und der damit verbundenen Änderungen seiner Ausgangspotentiale U2a, U2b an der Erdkapazität Cp32 des von ihm gespeisten Wicklungsstrangs 32 einen Spannungsabfall Uc32 und damit einen Common-Mode-Störstrom Icm2 in der DC-Spannungsversorgungseinrichtung 4. In der DC-Spannungsversorgungseinrichtung 4 wird somit ein Gesamt-Common-Mode-Störstrom Icmg wirksam, der sich aus der Summe der Common-Mode-Störströme Icm1 und Icm2 der beiden einzelnen Pulsumrichter 1 und 2 ergibt: Icmg = Icm1 + Icm2.

Bei symmetrischem Aufbau der Drehfeldmaschine 3 sind auch die parasitären Wicklungskapazitäten Cp31, Cp32 der Wicklungsstränge 31, 32 zumindest annähernd gleich groß, so dass bei gleich großen Spannungen Uc31 und Uc32 auch die beiden Common-Mode-Störströme Icm1 und Icm2 gleich groß sind. Erfindungsgemäß werden zur Verringerung des in der DC-Spannungsversorgungseinrichtung 4 wirksamen Gesamt-Common-Mode-Störstroms Icmg die beiden Pulsumrichter 1, 2 durch Ansteuervorrichtungen 51,52 derart angesteuert, dass bei beiden Pulsumrichtern 1, 2 an ihren Ausgängen 1a, 1b bzw. 2a, 2b die für die Entstehung der Common-Mode-Strömen Icm1, Icm2 maßgeblichen Potentiale U1a, U1b bzw. U2a, U2b zumindest annähernd gleichzeitig so auf die Wicklungsstränge 31, 32 der Drehfeldmaschine 3 geschaltet werden, dass die Spannungspotentiale Uc31, Uc32 über den parasitären Kapazitäten Cp31, Cp32 der Wicklungsstränge 31, 32 gegenüber Erdpotential entgegengesetzt gerichtet sind und sich somit die Common-Mode-Störströme Icm1 und Icm2 gegeneinander aufheben. Die beiden Ansteuervorrichtungen 51, 52 sind hierzu in geeigneter Weise signaltechnisch miteinander verknüpft, insbesondere miteinander synchronisiert.

Falls es räumliche, funktionale oder gerätetechnische Gegebenheiten erlauben, kann anstatt der miteinander synchronisierten Ansteuervorrichtungen 51, 52 eine gemeinsame Steuervorrichtung 5 vorgesehen werden.

FIG 2 zeigt anhand von Zeitdiagrammen ein Beispiel für den Verlauf der Pulsumrichter-Ausgangspotentiale U1a, U1b bzw. U2a, U2b und der daraus resultierenden Pulsumrichter-Ausgangsspannungen U1, U2 sowie der Spannungen Uc31, Uc32 über den parasitären Kapazitäten Cp31, Cp32. Durch Ansteuerung der Halbbrücke W1a des Umrichters 1 gegensinnig zur Halbbrücke W2b des Umrichters 2 und Ansteuerung der Halbbrücke W1b des Umrichters 1 gegensinnig zur Halbbrücke W2a des Umrichters 2 wird erreicht, dass sich das Ausgangspotential U1a gegensinnig zum Ausgangspotential U2b und das Ausgangspotential U1b gegensinnig zum Potential U2a ändert. In den Zeitabschnitten ta befindet sich somit der gesamte Wicklungsstrang 31 auf negativem Potential UDC- der DC-Spannungsversorgungseinrichtung 4, d,h. Uc31 = UDC- = U1a = U1b. Der gesamte Wicklungsstrang 32 befindet sich hingegen im Zeitabschnitt ta auf positivem Potential UDC+ der DC-Spannungsversorgungseinrichtung 4, d.h. Uc32 = UDC+ = U2a = U2b. In den Zeitabschnitten tb befindet sich der gesamte Wicklungsstrang 31 auf positivem Potential UDC+ der DC-Spannungsversorgungseinrichtung 4, d,h. Uc31 = UDC+ = U1a = U1b und der gesamte Wicklungsstrang 32 befindet sich im Zeitabschnitt tb auf negativem Potential UDC- der DC-Spannungsversorgungseinrichtung 4, d.h. Uc32 = UDC- = U2a = U2b. Damit verlaufen auch die Spannungsänderungen über den parasitären Kapazitäten Cp31 und Cp32 gegensinnig zueinander, wie das in FIG 2 anhand der zeitlichen Verläufe der Spannungen Uc31 und Uc32 zu erkennen ist und auch anhand der Summe beider Spannungen Uc31 + Uc32 deutlich wird, die zu allen Zeitpunkten Null ist.

Unter den Voraussetzungen zeitgleicher Umschaltvorgänge in den Umrichter-Halbbrücken W1a, W2b bzw. W1b, W2a sowie gleich großer Kapazitäten Cp31 und Cp32 haben die über Erdpotential fließenden Common-Mode-Ströme Icm1 und Icm2 somit zwar den gleichen Betrag, sind aber entgegengesetzt gerichtet, d.h. es gilt Icm1 = -Icm2. In der Summe heben sich damit beide Ströme Icm1 und Icm2 gegenseitig auf, d.h. in der DC-Spannungsversorgungseinrichtung 4 wird somit auch kein aus den Schaltvorgängen der Pulsumrichter 1, 2 herrührender Common-Mode-Störstrom Icmg mehr wirksam.

Von besonderer Bedeutung für das Verhalten der elektrischen Drehfeldmaschine 3 ist, dass durch die erfindungsgemäße Lösung die an den Wicklungssträngen 31, 32 anliegenden Umrichter-Ausgangsspannungen U1, U2 der beiden Pulsumrichter 1,2 nicht verändert werden und weiterhin den gleichen zeitlichen Verlauf haben, so dass sich für die Funktion des Antriebs keinerlei Änderung ergibt.

Die Ansteuerung der Pulsumrichter 1, 2 kann, wie bereits in Zusammenhang mit den Erläuterungen zu FIG 5 und 6 dargestellt, beispielsweise unter Zuhilfenahme einer Dreieck-Hilfsfunktion UΔ im Sinne der bekannten Sinus-Dreieck-Modulation erfolgen. Wie FIG 2 zeigt, wird die gegensinnige Ansteuerung der Halbbrücke W1a des Umrichters 1 zur Halbbrücke W2b des Umrichters 2 und die gegensinnige Ansteuerung der Halbbrücke W1b des Umrichters 1 zur Halbbrücke W2a des Umrichters 2 dadurch erreicht, dass in der Ansteuervorrichtung 51 eine Dreieck-Hilfsfunktion UΔ1 = UΔ und in der Ansteuervorrichtung 52 die dazu inverse Dreieck-Hilfsfunktion UΔ2 = -UΔ verwendet wird. In der Prinzipdarstellung des Ausführungsbeispiels von FIG 1 wird die Dreieck-Hilfsfunktion UΔ2 = -UΔ aus der Dreieck-Hilfsfunktion UΔ mit Hilfe des symbolisch dargestellten Invertierers 59 erzeugt. Die die Umrichteraussteuerung bestimmenden Steuerspannung Ust ist für beide Pulsumrichter 1, 2 vorzugsweise identisch Ust1 = Ust2 = Ust, so dass die Momentanwerte ihrer Ausgangsspannungen U1,U2 zumindest annähernd gleich sind.

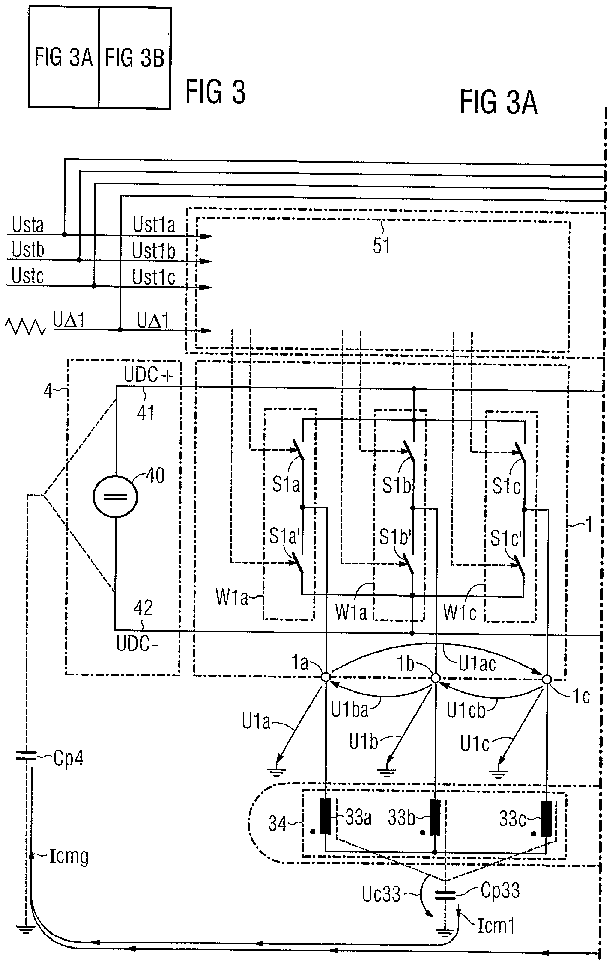

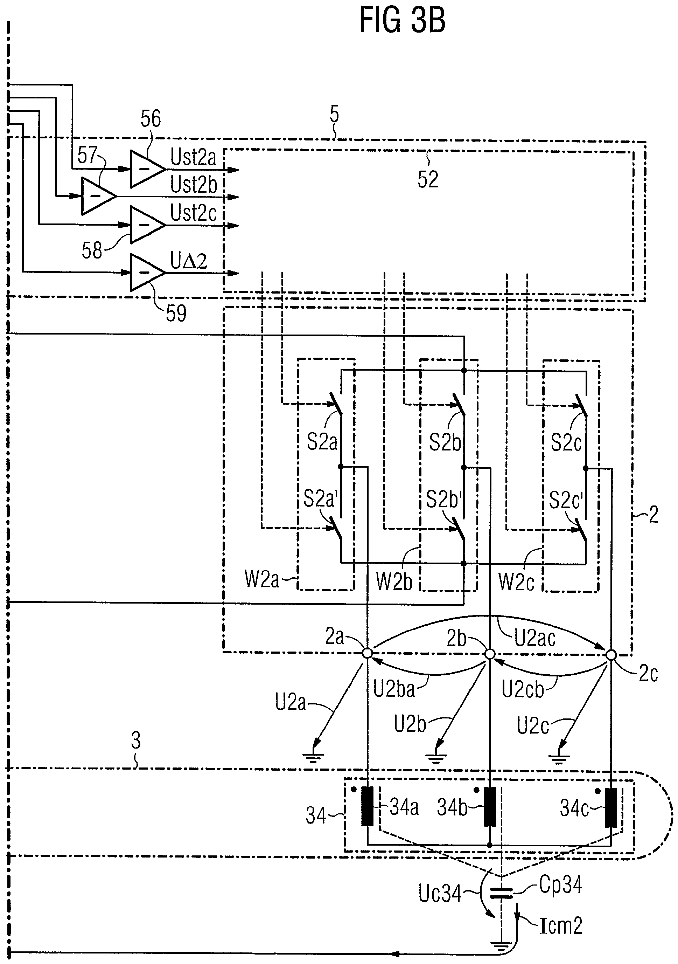

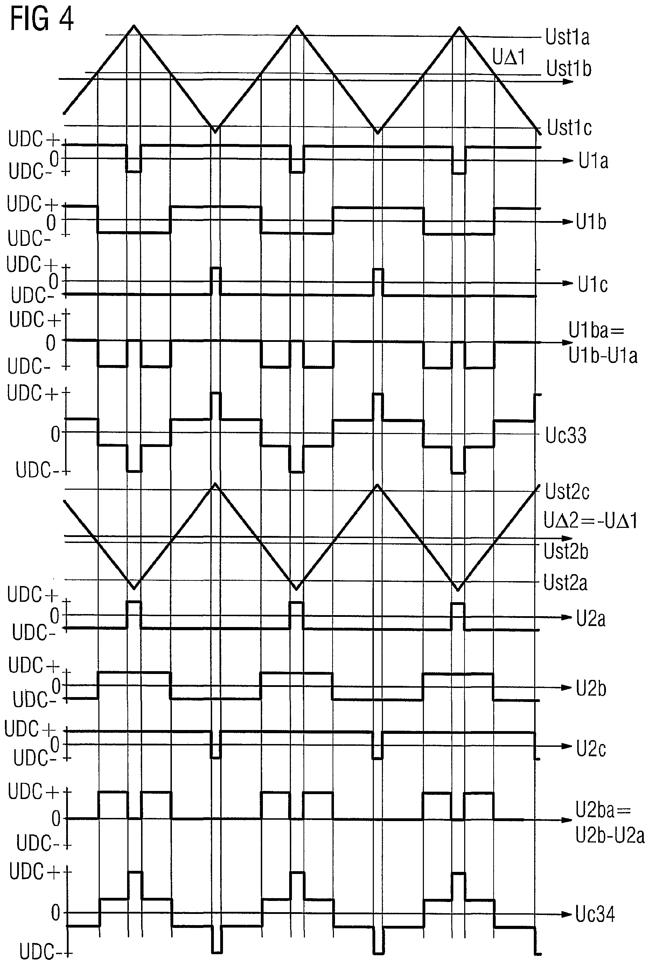

Anhand FIG 3 und 4 soll nun die erfindungsgemäße Verringerung der Common-Mode-Störströme am Beispiel eines elektrischen Antriebssystems mit Speisung von zwei dreisträngigen Wicklungssystemen einer Drehfeldmaschine über zwei dreiphasige Pulsumrichter aus einer gemeinsamen DC-Spannungsversorgungseinrichtung gezeigt werden.

FIG 3 zeigt in vereinfachter Darstellung zwei Wicklungssysteme 33, 34 einer elektrischen Drehfeldmaschine 3, die über je einen dreiphasigen Pulsumrichter 1, 2 von einer gemeinsamen DC-Spannungsversorgungseinrichtung 4 gespeist werden. Die jeweils drei Phasen sind mit den Buchstaben a, b, und c gekennzeichnet. Die DC-Spannungsversorgungseinrichtung 4 umfasst wiederum eine DC-Spannungsquelle 40 und strom- und spannungsführenden Leiter 41, 42, wie sie bereits in den Erläuterungen zu FIG 1 und 5 beschrieben sind. Mit Cp4 ist wiederum die parasitäre Kapazität der DC-Spannungsversorgungseinrichtung gegen Erdpotential bezeichnet. Die Pulsumrichter 1 und 2 haben je drei Halbbrücken W1a, W1b, W1c bzw. W2a, W2b, W2c mit jeweils zwei Schaltern (S1a,S1a' ; S1b,S1b' ; S1c,S1c' bzw.

S2a,S2a'; S2b,S2b'; S2c, S2c'). An den Ausgangsklemmen 1a, 1b, 1c bzw. 2a, 2b, 2c der Umrichter 1 bzw. 2 sind die beiden Wicklungssysteme 33 bzw. 34 der Drehfeldmaschine 3 angeschlossen. Die parasitären Kapazitäten der Wicklungsstränge gegen Erdpotential sind in vereinfachender Weise in Form von parasitären Kapazitäten Cp33, Cp34 der Wicklungssysteme 33, 34 gegen Erdpotential dargestellt. Die über der parasitären Kapazität Cp33 abfallende Spannung trägt die Bezeichnung Uc33; die Spannung über der Kapazität Cp34 trägt die Bezeichnung Uc34.

Die beiden Wicklungssysteme 33, 34 der Drehfeldmaschine 3 sind erfindungsgemäß um 180° elektrisch versetzt zueinander angeordnet. Bei gleichem Wickelsinn der Motorwicklungen kann dies durch geeignete Zusammenschaltung der Wicklungsanfänge bzw. Wicklungsenden der Wicklungsstränge 33a, 33b, 33c bzw. 34a, 34b, 34c geschehen. Zur Verdeutlichung sind in FIG 3 die Wicklungsanfänge bei gleichem Wickelsinn wie üblich durch einen Punkt ● gekennzeichnet.

Die zur Ansteuerung der Pulsumrichter erforderliche Steuervorrichtung bzw. Ansteuervorrichtungen tragen die Bezeichnungen 5 bzw. 51, 52. Aus Gründen einer hohen Anschaulichkeit der erfindungsgemäßen Lösung wird dabei im ausgeführten Beispiel wiederum ein Ansteuerverfahren unter Nutzung von Dreieck-Hilfsfunktionen im Sinne der bekannten Sinus-Dreieckmodulation verwendet.

Der Pulsumrichter 1 erzeugt auf Grund seiner Schalthandlungen und der damit verbundenen Änderungen seiner Ausgangspotentiale U1a, U1b, U1c an der Erdkapazität Cp33 des von ihm gespeisten Wicklungssystems 33 einen Spannungsabfall Uc33 und damit einen Common-Mode-Störstrom Icm1. Entsprechend verursacht der Pulsumrichter 2 aufgrund seiner Schalthandlungen und der damit verbundenen Änderungen seiner Ausgangspotentiale U2a, U2b, U2c an der Erdkapazität Cp34 des von ihm gespeisten Wicklungsstrangs 34 einen Spannungsabfall Uc34 und damit einen Common-Mode-Störstrom Icm2. In der DC-Spannungsversorgungseinrichtung 4 wird somit ein Gesamt-Common-Mode-Störstrom Icmg wirksam, der sich aus der Summe der Common-Mode-Störströme Icm1 und Icm2 der beiden einzelnen Pulsumrichter 1 und 2 ergibt: Icmg = Icm1 + Icm2. Bei symmetrischem Aufbau der Drehfeldmaschine 3 sind auch die parasitären Kapazitäten Cp33 und Cp34 der Wicklungssysteme 33, 34 zumindest annähernd gleich groß, so dass bei gleich großen Spannungen Uc33 und Uc34 auch die beiden Common-Mode-Störströme Icm1 und Icm2 gleich groß sind.

Erfindungsgemäß werden die beiden Pulsumrichter 1,2 durch die Ansteuervorrichtungen 51, 52 bzw. durch die Steuervorrichtung 5 derart angesteuert, dass an ihren Ausgängen 1a, 1b, 1c bzw. 2a, 2b, 2c die für die Entstehung der Common-Mode-Ströme Icm1, Icm2 maßgeblichen Potentiale U1a, U1b, U1c bzw. U2a, U2b, U2c zumindest annähernd gleichzeitig so auf die Wicklungssysteme 33, 34 geschaltet werden, dass die Spannungspotentiale Uc33, Uc34 über den parasitären Kapazitäten Cp33, Cp34 der Wicklungssysteme 33, 34 gegenüber Erdpotential zueinander entgegengesetzt gerichtet sind und sich somit die Common-Mode-Störströme ICm1 und Icm2 gegeneinander aufheben.

Dies gelingt im dargestellten Ausführungsbeispiel dadurch, dass sich durch gegensinnige Ansteuerung der Halbbrücken W1a, W1b und W1c des Umrichters 1 zu den Halbbrücken W2a, W2b und W2c des Umrichters 2 die Ausgangspotentiale U1a, U2a bzw. U1b, U2b bzw. U1c, U2c W2b gegensinnig zueinander ändern.

FIG 4 zeigt diesbezüglich anhand von Zeitdiagrammen ein Beispiel für den Verlauf der Umrichter-Ausgangspotentiale U1a, U1b, U1c bzw. U2a, U2b, U2c sowie der Spannungen Uc33, Uc34 über den parasitären Kapazitäten Cp33, Cp34. Durch die gegensinnige Ansteuerung der Halbbrücken W1a, W1b und W1c des Umrichters 1 zu den Halbbrücken W2a, W2b und W2c des Umrichters 2 verlaufen auch die Spannungsänderungen Uc33, Uc34 über den parasitären Kapazitäten Cp33 und Cp34 gegensinnig zueinander, wie das in FIG 4 anhand der zeitlichen Verläufe zu erkennen ist. Unter den Voraussetzungen zeitgleicher Umschaltvorgänge in den Umrichter-Halbbrücken W1a, W2a bzw. W1b, W2b bzw. W1c, W2c sowie gleich großer Kapazitäten Cp33 und Cp34 haben die über Erdpotential fließenden Common-Mode-Ströme Icm1 und Icm2 somit den gleichen Betrag, sind aber entgegengesetzt gerichtet, d.h. es gilt Icm1 = -Icm2. In der Summe heben sich damit beide Ströme Icm1 und Icm2 gegenseitig auf, d.h. in der DC-Spannungsversorgungseinrichtung 4 wird somit auch kein aus den Schaltvorgängen der Pulsumrichter 1, 2 herrührender Common-Mode-Störstrom Icmg mehr wirksam. Die gleiche Aussage lässt sich treffen, wenn die Summe beider Spannungen Uc33 + Uc34 betrachtet wird; sie ist zu allen Zeitpunkten Null.

Die Bildung der Schaltzeitpunkte zur Ansteuerung der Pulsumrichter erfolgt in dem in FIG 3 und 4 dargestellten Ausführungsbeispiel wiederum in beispielhafter Weise unter Zuhilfenahme einer Dreieck-Hilfsfunktion UΔ im Sinne der bekannten Sinus-Dreieck-Modulation. Für den Pulsumrichter 1 werden dabei in bekannter Weise in der Ansteuervorrichtung 51 eine Dreieck-Hilfsfunktion UΔ1 = UΔ mit den die Umrichteraussteuerung bestimmenden Steuerspannungen Ust1a = Usta, Ust1b = Ustb und Ust1c = Ustc verglichen, um daraus die Schaltzeitpunkte für die Schalter S1a,S1a', S1b,S1b' und S1c,S1c' zu ermitteln. Die Ermittlung der Schaltzeitpunkte für den Pulsumrichter 2 erfolgt nach dem gleichen Prinzip in der Ansteuervorrichtung 52. Um eine im Vergleich zu Umrichter 1 gegensinnige Änderung der Schaltzustände zu errreichen, werden in der Ansteuervorrichtung 52 die Schaltzeitpunkte der Schalter S2a,S2a', S2b,S2b' und S2c,S2c' jedoch gemäß FIG 4 aus den inversen Signalen gebildet: UΔ2 = -UΔ1 = -UΔ; Ust2a = -Ust1a = -Usta; Ust1b = -Ust1b = -Ustb und Ust2c = -Ust1c = -Ustc. Die Bildung der genannten inversen Signale kann beispielsweise mit Hilfe der in FIG 3 symbolisch dargestellten Invertierer 56, 57, 58 und 59 erfolgen.

Repräsentativ für die resultierenden Umrichter-Ausgangsspannungen sind in FIG 4 weiterhin die Spannungen U1ba und U2ba zwischen den Umrichter-Ausgangsklemmen 1a, 1b bzw. 2a, 2b dargestellt. Wie FIG 4 zeigt, sind diese für das Verhalten der Maschine maßgeblichen Umrichter-Ausgangsspannungen auf Grund der inversen Ansteuerung ebenfalls invers zueinander. Damit beide Umrichter 1, 2 über die Wicklungssyteme 33, 34 die vorzugsweise gleichen Grundschw ingungsphasenlagen des magnetischen Flusses in der Maschine erzeugen, ist es daher -wie bereits erwähnt- erforderlich, dass beide Wicklungssysteme 33, 34 um 180°elektrisch zueinander versetzt angeordnet sind.

Durch die Anwendung der erfindungsgemäßen Lösung in Antriebssystemen mit von mehrphasigen Pulsuzmrichtern gespeisten mehrphasigen Wicklungssystemen ergibt sich somit keinerlei Änderung für die Funktion des Antriebs.
Wie bereits erwähnt, müssen die bei de Ansteuervorrichtungen 51, 52 miteinander synchronisiert werden, damit sich in den betreffenden Halbbrücken (W1a, W2b bzw. W1b, W2a bei einphasigen Umrichtern bzw. W1a, W2a; W1b, W2b; W1c, W2b bei dreiphasigen Umrichtern) gleiche Schalt zeitpunkte ergeben können. Bei der in beispielhafter Weise beschriebenen Verwendung einer Dreieck-Hilfsfunktion UΔ im Sinne der bekannten Sinus-Dreieck-Modulation geschieht das durch die Dreieck-Hilfsfunktion UΔ selbst.
Zur Ansteuerung der Halbbrücken (W1 a, W2b bzw. W1b, W2a bei einphasigen Umrichtern bzw. W1a, W2 a; W1b, W2b; W1c, W2b bei dreiphasigen Umrichtern) können allerdings auch andere online- oder offline-Modulationsverfahren verwendet werden; in diesem Fall ist die Synchronisierung in anderer, geeigneter Weise zu realisieren.
Die signaltechnischen Funktionen der Steuervorrichtung (5) bzw. der Ansteuervorrichtungen (51, 52) sind vorteilhafterweise in zumindest einem programmierbaren Hardwarebaustein, insbesondere LCA, und/oder mittels Software in einer digitalen Signalverarbeitung mit mindestens einem digitalen Prozessor realisiert und/oder als herkömmliche Hardware in Analog- und/oder Digitaltechnik ausgeführt.

Wird die Drehfeldmaschine 3 von mehr als zwei Pulsumrichtern 1, 2 von einer gemeinsamen DC-Spannungsversorgung 4 gespeist, so werden jeweils je zwei dieser Pulsumrichter mit dem erfindungsgemäßen Ansteuerverfahren betrieben, so dass sich die jeweiligen, von den je zwei Pulsumrichtern erzeugten Common-Mode-Störströme gegeneinander aufheben.

Treten Unterschiede in den Momentanwerten der Steuerspannungen Ust1, Ust2 der beiden Pulsumrichter 1, 2 auf, wie das z.B. bei unterschiedlichen Grundschwingungsphasenlagen von Drehstrommaschinen sein kann, verbleiben Reste im resultierenden Common-Mode-Störstrom Icmg. Besonders vorteilhaft ist die erfindungsgemäße Lösung deshalb dann einsetzbar, wenn jeweils ein Paar von Pulsumrichtern 1, 2 gleiche oder nahezu gleiche (bzw. inverse) Ausgangsspannungen erzeugen und damit Wicklungsstränge 31, 32 oder mehrphasige Wicklungssysteme 33, 34 mit gleicher (bzw. inverser) Grundschwingungsphasenlage gespeist werden.

Derartige, insbesondere als rotorseitig permanentmagnetisch erregte Synchronmaschinen ausgebildete Drehfeldmaschinen können aufgrund der Einzelspeisung ihrer Wicklungsstränge bzw. durch Verwendung mehrerer mehrphasiger Wicklungssysteme für hohe Antriebsleistungen ausgelegt werden, wie sie insbesondere z.B. für den Propulsionsantrieb eines Schiffes, inbesondere eines U-Bootes, benötigt wird.

## Patentansprüche

1. Verfahren zur Verringerung von Common-Mode-Störströmen in einem elektrischen Antriebssystem mit zumindest zwei, aus einer gemeinsamen DC-Spannungsversorgungseinrichtung (4) gespeisten Pulsumrichtern (1,2) zur Speisung einer elektrischen Drehfeldmaschine(3) mit zumindest zwei Wicklungssträngen (31, 32) oder zumindest zwei Wicklungssystemen (33, 34),
wobei zumindest jeweils je zwei der Pulsumrichter (1, 2) durch eine Steuervorrichtung (5) derart angesteuert werden, dass bei beiden Pulsumrichtern (1, 2) an ihren Ausgängen (1a, 1b, 1c bzw. 2a, 2b, 2c) die für die Entstehung von Common-Mode-Strömen (Icm1, Icm2) maßgeblichen Potentiale (U1a, U1b, U1c bzw. U2a, U2b, U2c) zumindest annähernd gleichzeitig so auf die mit parasitären Kapazitäten (Cp31, Cp32) behafteten Wicklungsstränge (31, 32) bzw. die mit parasitären Kapazitäten (Cp33, Cp34) behafteten Wicklungssysteme (33, 34) der Drehfeldmaschine (3) geschaltet werden, dass die Spannungspotentiale (Uc31, Uc32 bzw. Uc33, Uc34) über den parasitären Kapazitäten (Cp31, Cp32) der Wicklungsstränge (31, 32) bzw. über den parasitären Kapazitäten (Cp33, Cp34) der Wicklungssysteme (33, 34) gegenüber Erdpotential zueinander entgegengesetzt gerichtet sind,
**dadurch gekennzeichnet, dass** die Ansteuerung für die je zwei Pulsumrichter (1, 2) durch ein Modulationsverfahren mit Hilfe von Dreieck-Hilfsfunktionen realisiert wird, wobei die Dreieck-Hilfsfunktion (UΔ1) des einen der je zwei Pulsumrichter (1) gegenüber der Dreieck-Hilfsfunktion (UΔ2) des anderen der je zwei Pulsumrichter (2) invertiert ist.

2. Verfahren nach Anspruch 1 zum Betrieb einer Drehfeldmaschine (3) mit mehreren, im Sinne einer Einzelstrangspeisung von je einem einphasigen Pulsumrichter (1 bzw. 2) gespeisten Wicklungssträngen (31, 32),
**dadurch gekennzeichnet, dass** die je zwei Pulsumrichter (1, 2) durch die Steuervorrichtung (5) so angesteuert werden, dass die Momentanwerte der Ausgangsspannungen (U1, U2) der je zwei Pulsumrichter (1, 2) zumindest annähernd gleich sind.

3. Verfahren nach Anspruch 1 zum Betrieb einer Drehfeldmaschine (3) mit mehreren, von je einem mehrphasigen Pulsumrichter (1 bzw. 2) gespeisten mehrphasigen Wicklungssystemen (33, 34),
**dadurch gekennzeichnet, dass** die von den je zwei Pulsumrichtern (1, 2) gespeisten Wicklungssysteme (33 bzw. 34) zumindest annähernd um 180° elektrisch gegeneinander versetzt in der Drehfeldmaschine (3) angeordnet werden und die je zwei Pulsumrichter (1, 2) durch die Steuervorrichtung (5) derart angesteuert werden, dass die Momentanwerte der Ausgangsspannungen (U1ba, U1cb, U1ac) bzw. (U2ba, U2cb, U2ac) der je zwei Pulsumrichter (1, 2) zueinander invers sind.

4. Verfahren nach zumindest einem der vorhergehenden Ansprüche,
**dadurch gekennzeichnet, dass** die Ansteuerung für die je zwei Pulsumrichter (1, 2) mit Hilfe von online und/oder offline arbeitenden Modulationsverfahren bzw. Pulsmustern erfolgt.

5. Elektrisches Antriebssystem mit zumindest zwei, aus einer gemeinsamen DC-Spannungsversorgungseinrichtung (4) gespeisten Pulsumrichtern (1,2) zur Speisung einer elektrischen Drehfeldmaschine(3) mit zumindest zwei Wicklungssträngen (31, 32) oder zumindest zwei Wicklungssystemen (33, 34), insbesondere zur Durchführung des Verfahrens nach einem der Ansprüche 1 bis 4,
wobei zumindest jeweils je zwei der Pulsumrichter (1, 2) eine, von einer Steuervorrichtung (5) abhängige Schaltabhängigkeit aufweisen, dass bei beiden Pulsumrichtern (1, 2) an ihren Ausgängen (1a, 1b, 1c bzw. 2a, 2b, 2c) die für die Entstehung der Common-Mode-Ströme (Icm1, Icm2) maßgeblichen Potentiale (U1a, U1b, U1c bzw. U2a, U2b, U2c) zumindest annähernd gleichzeitig so auf die mit parasitären Kapazitäten (Cp31, Cp32) behafteten Wicklungsstränge (31, 32) bzw. die mit parasitären Kapazitäten (Cp33, Cp34) behafteten Wicklungssysteme (33, 34) der Drehfeldmaschine (3) geschaltet werden, dass die Spannungspotentiale (Uc31, Uc32 bzw. Uc33, Uc34) über den parasitären Kapazitäten (Cp31, Cp32) der Wicklungsstränge (31, 32) bzw. über den parasitären Kapazitäten (Cp33, Cp34) der Wicklungssysteme (33, 34) gegenüber Erdpotential zueinander entgegengesetzt gerichtet sind, **dadurch gekennzeichnet, dass** die je zwei Pulsumrichter (1, 2) durch ein Modulationsverfahren mit Hilfe von Dreieck-Hilfsfunktionen ansteuerbar sind, wobei die Dreieck-Hilfsfunktion (UΔ1) des einen der je zwei Pulsumrichter (1) gegenüber der Dreieck-Hilfsfunktion (UΔ2) des anderen der je zwei Pulsumrichter (2) invertiert ist.

6. Elektrisches Antriebssystem nach Anspruch 5, wobei die zumindest eine Drehfeldmaschine (3) mehrere von je einem einphasigen Pulsumrichter (1 bzw. 2) im Sinne einer Einzelstrangspeisung gespeiste Wicklungsstränge (31, 32) aufweist, **dadurch gekennzeichnet, dass** die je zwei Pulsumrichter (1, 2) durch die Steuervorrichtung (5) eine Schaltabhängigkeit in der Art aufweisen, dass die Momentanwerte der Ausgangsspannungen (U1, U2) der je zwei Pulsumrichter (1, 2) zumindest annähernd gleich sind.

7. Elektrisches Antriebssystem nach Anspruch 5, wobei die zumindest eine Drehfeldmaschine (3) mehrere von je einem mehrphasigen Pulsumrichter (1 bzw. 2) gespeiste mehrphasige Wicklungssysteme (33, 34) aufweist,
**dadurch gekennzeichnet, dass** die von den je zwei Pulsumrichtern (1, 2) gespeisten Wicklungssysteme (33 bzw. 34) zumindest annähernd um 180° elektrisch gegeneinander versetzt in der Drehfeldmaschine (3) angeordnet sind und die je zwei Pulsumrichter (1, 2) durch die Steuervorrichtung (5) eine Schaltabhängigkeit in der Art aufweisen, dass die Momentanwerte der Ausgangsspannungen (U1ba, U1cb, U1ac) bzw.
(U2ba, U2cb, U2ac) der je zwei Pulsumrichter (1, 2) zueinander invers sind.

8. Elektrisches Antriebssystem (19) nach zumindest einem der Ansprüche 5 bis 7,
**dadurch gekennzeichnet, dass** eine gemeinsame Steuervorrichtung (5) für die jeweils je zwei Pulsumrichter (1, 2) vorgesehen ist.

9. Elektrisches Antriebssystem nach zumindest einem der Ansprüche 5 bis 7,
**dadurch gekennzeichnet, dass** mehrere, insbesondere zwei, gerätetechnisch und/oder funktionell getrennte und in geeigneter Weise signaltechnisch miteinander verknüpfte, insbesondere miteinander synchronisierte, Ansteuervorrichtungen (51, 52) für die jeweils je zwei Pulsumrichter (1, 2) vorgesehen sind.

10. Elektrisches Antriebssystem nach zumindest einem der Ansprüche 5 bis 9,
**dadurch gekennzeichnet, dass** signaltechnischen Funktionen der Steuervorrichtung (5) bzw. der Ansteuervorrichtungen (51, 52) in zumindest einem programmierbaren Hardwarebaustein, insbesondere LCA, und/oder mittels Software in einer digitalen Signalverarbeitung mit mindestens einem digitalen Prozessor realisiert sind und/oder mit herkömmlicher Hardware in Analog- und/oder Digitaltechnik ausgeführt sind.

11. Elektrisches Antriebssystem nach zumindest einem der Ansprüche 5 bis 10,
**dadurch gekennzeichnet, dass** eine oder mehrere der elektrische Drehfeldmaschinen (3) als Synchronmaschinen mit elektrischer oder permanentmagnetischer Erregung ausgeführt sind.

12. Elektrisches Antriebssystem nach zumindest einem der Ansprüche 5 bis 10,
**dadurch gekennzeichnet, dass** eine oder mehrere der elektrische Drehfeldmaschinen (3) als Asynchronmaschinen ausgeführt sind.

13. Elektrisches Antriebssystem nach zumindest einem der Ansprüche 5 bis 12,
**dadurch gekennzeichnet, dass** eine oder mehrere der elektrische Drehfeldmaschinen (3) Propulsionsantriebe eines Schiffes, insbesondere eines U-Bootes, sind.

14. Verwendung des elektrischen Antriebssystems nach zumindest einem der Ansprüche 5 bis 13 in einem elektrischen Bordnetz, insbesondere einem elektrischen DC-Bordnetz auf Schiffen, insbesondere auf U-Booten.

## Claims

1. Method for reducing common-mode interference currents in an electric drive system, having at least two pulse converters (1, 2) that are fed by a common DC power supply device (4) for feeding an electric polyphase machine (3) having at least two winding phases (31, 32) or at least two winding systems (33, 34), wherein at least two of the pulse converters (1, 2) in each case are respectively triggered by a control device (5) such that the potentials (U1a, U1b, U1c or U2a, U2b, U2c) that are decisive for the generation of common-mode currents (Icm1, Icm2) are applied in an at least approximately simultaneous manner to the winding phases (31, 32) affected by parasitic capacitances (Cp31, Cp32) or the winding systems (33, 34) of the polyphase machine (3) which are affected by parasitic capacitances (Cp33, Cp34), at the outputs (1a, 1b, 1c or 2a, 2b, 2c) of both pulse converters (1, 2), such that the voltage potentials (Uc31, Uc32 or Uc33, Uc34) are inverted relative to each other above the parasitic capacitances (Cp31, Cp32) of the winding phases (31, 32) or above the parasitic capacitances (Cp33, Cp34) of the winding systems (33, 34) in relation to the earth potential,
**characterised in that** the triggering for each two pulse converters (1, 2) is realised by a modulation procedure with the help of triangular auxiliary functions, wherein the triangular auxiliary function (UΔ1) of one of each two pulse converters (1) is inverted compared to the triangular auxiliary function (UΔ2) of the other of each two pulse converters (2).

2. Method according to claim 1 for operating a polyphase machine (3) having a plurality of winding phases (31, 32) fed in terms of a single-winding power supply by one single-phase pulse converter (1, 2) in each case,
**characterised in that** each two pulse converters (1, 2) are triggered by the control device (5), such that the instantaneous values of the output voltages (Ul, U2) of each two pulse converters (1, 2) are at least approximately equal.

3. Method according to claim 1 for operating a polyphase machine (3) having a plurality of multiphase winding systems (33, 34) fed by one multiphase pulse converter (1 or 2) each, **characterised in that** the winding systems (33 or 34) fed by each two pulse converters (1, 2) are arranged in the polyphase machine (3) so as to be electrically offset from one another by at least approximately 180° and each two pulse converters (1, 2) are triggered by the control device (5), such that the instantaneous values of the output voltages (U1ba, U1cb, U1ac) or (U2ba, U2cb, U2ac) of each two pulse converters (1, 2) are inverse to one another.

4. Method according to at least one of the preceding claims, **characterised in that** the triggering for each two pulse converters (1, 2) takes place with the aid of modulation procedures or pulse patterns working online and/or offline.

5. Electric drive system having at least two pulse converters (1, 2) fed from a common DC voltage supply device (4) for feeding an electric polyphase machine (3) having at least two winding phases (31, 32) or at least two winding systems (33, 34), in particular for the performance of the method according to one of claims 1 to 4,
wherein at least in each case each two of the pulse converters (1, 2) have a switching dependency dependent on a control device (5), such that the potentials (U1a, U1b, U1c or U2a, U2b, U2c) that are decisive for the generation of common-mode currents (Icm1, Icm2) are applied in an at least approximately simultaneous manner to the winding phases (31, 32) affected by parasitic capacitances (Cp31, Cp32) or the winding systems (33, 34) of the polyphase machine (3) which are affected by parasitic capacitances (Cp33, Cp34), at the outputs (1a, 1b, 1c or 2a, 2b, 2c) of both pulse converters (1, 2), such that the voltage potentials (Uc31, Uc32 or Uc33, Uc34) are inverted relative to each other above the parasitic capacitances (Cp31, Cp32) of the winding phases (31, 32) or above the parasitic capacitances (Cp33, Cp34) of the winding systems (33, 34) in relation to the earth potential,
**characterised in that** each two pulse converters (1, 2) can be triggered by a modulation procedure with the help of triangular auxiliary functions, wherein the triangular auxiliary function (UΔ1) of one of each two pulse converters (1) is inverted compared to the triangular auxiliary function (UΔ2) of the other of each two pulse converters (2).

6. Electric drive system according to claim 5, wherein the at least one polyphase machine (3) has a plurality of winding phases (31, 32) fed in terms of a single-winding power supply by a single-phase pulse converter (1, 2) in each case, **characterised in that** each two pulse converters (1, 2) have a switching dependency thanks to the control device (5), such that the instantaneous values of the output voltages (Ul, U2) of each two pulse converters (1, 2) are at least approximately equal.

7. Electric drive system according to claim 5, wherein the at least one polyphase machine (3) has a plurality of multiphase winding systems (33, 34) fed by one multiphase pulse converter (1 or 2) each,
**characterised in that** the winding systems (33 or 34) fed by each two pulse converters (1, 2) are arranged in the polyphase machine (3) so as to be electrically offset from one another by at least approximately 180° and each two pulse converters (1, 2) have a switching dependency thanks to the control device (5), such that the instantaneous values of the output voltages (U1ba, U1cb, U1ac) or (U2ba, U2cb, U2ac) of each two pulse converters (1, 2) are inverse to one another.

8. Electric drive system (19) according to at least one of claims 5 to 7,
**characterised in that** a common control device (5) is provided for each two pulse converters (1, 2) in each case.

9. Electric drive system according to at least one of claims 5 to 7,
**characterised in that** a plurality of, in particular two, trigger devices (51, 52) which are linked to one another, in particular synchronised with one another in a device-related and/or functionally separate and suitably signal-related manner, are provided for each two pulse converters (1, 2) in each case.

10. Electric drive system according to at least one of claims 5 to 9,
**characterised in that** signal-related functions of the control device (5) or of the triggering devices (51, 52) are realised in at least one programmable hardware module, in particular LCA, and/or by means of software in digital signal processing with at least one digital processor and/or are executed with conventional hardware in analogue and/or digital technologies.

11. Electric drive system according to at least one of claims 5 to 10,
**characterised in that** one or more of the electric polyphase machines (3) is embodied as a synchronous machine with electric or permanent-magnetic excitation.

12. Electric drive system according to at least one of claims 5 to 10,
**characterised in that** one or more of the electric polyphase machines (3) is embodied as an asynchronous machine.

13. Electric drive system according to at least one of claims 5 to 12,
**characterised in that** one or more of the electric polyphase machines (3) is a propulsion drive of a ship, in particular a submarine.

14. Use of the electric drive system according to at least one of claims 5 to 13 in an electric on-board power supply system, in particular an electric DC on-board power supply system on ships, in particular on submarines.

## Revendications

1. Procédé pour diminuer les courants parasites en mode commun dans un système d'entraînement électrique, comprenant au moins deux convertisseurs (1, 2) à impulsion alimentés à partir d'un dispositif (4) commun d'alimentation en tension continue, pour l'alimentation d'une machine (3) électrique à champ tournant ayant au moins deux faisceaux (31, 32) d'enroulement ou au moins deux systèmes (33, 34) d'enroulement, dans lequel, au moins respectivement, deux convertisseurs (1, 2) à impulsion sont commandés par un dispositif (5) de commande, de manière à ce que, pour les deux convertisseurs (1, 2) à impulsion, à leurs sorties (1a, 1b, 1c et 2a, 2b, 2c) les potentiels (U1a, U1b, U1c et U2a, U2b, U2c) qu'il faut pour la création de courants (Icm1, Icm2) en mode commun, s'appliquent, au moins à peu près en même temps, à des faisceaux (31, 32) d'enroulement subissant des capacités (Cp31, Cp32) parasites ou à des systèmes (33, 34) d'enroulement subissant des capacités (Cp33, Cp34) parasites de la machine (3) à champ tournant, de manière à ce que les potentiels (Uc31, Uc32 et Uc33, Uc34) de tension soient, par les capacités (Cp31, Cp32) parasites des faisceaux (31, 32) d'enroulement et par les capacités (Cp33, Cp34) parasites des systèmes (33, 34) d'enroulement, dirigés en sens opposé les uns aux autres par rapport au potentiel de terre,
**caractérisé en ce que** la commande, des deux convertisseurs (1, 2) à impulsion, est réalisée par un procédé de modulation, à l'aide de fonctions auxiliaires triangulaires, la fonction (UΔ1) auxiliaire triangulaire de l'un de chacun des deux convertisseurs (1) à impulsion étant inversée par rapport à la fonction (UΔ2) auxiliaire triangulaire de l'autre des deux convertisseurs (2) à impulsion.

2. Procédé suivant la revendication 1, pour faire fonctionner une machine (3) à champ tournant ayant plusieurs faisceaux (31, 32) d'enroulement alimentés au sens d'une alimentation à un faisceau unique par, respectivement, un convertisseur (1 ou 2) à impulsion monophasé,
**caractérisé en ce que** les deux convertisseurs (1, 2) à impulsion sont commandés par le dispositif (5) de commande, de manière à ce que les valeurs instantanées des tensions (U1, U2) de sortie des deux convertisseurs (1, 2) à impulsion soient à peu près les mêmes.

3. Procédé suivant la revendication 1, pour faire fonctionner une machine (3) à champ tournant ayant plusieurs systèmes (33, 34) d'enroulement polyphasés, alimentés par, respectivement, un convertisseur (1 et 2) à impulsion polyphasé,
**caractérisé en ce que** les systèmes (33 et 34) d'enroulement, alimentés par les deux convertisseurs (1, 2) à impulsion, sont disposés dans la machine (3) à champ tournant en étant décalés au moins à peu près de 180° électriquement les uns par rapport aux autres et les deux convertisseurs (1, 2) à impulsion sont commandés par le dispositif (5) de commande, de manière à ce que les valeurs instantanées des tensions (U1ba, U1cb, U1ac) et (U2ba, U2cb, U2ac) de sortie des deux convertisseurs (1, 2) à impulsion soient inversées les unes par rapport aux autres.

4. Procédé suivant au moins l'une des revendications précédentes,
**caractérisé en ce que** la commande des deux convertisseurs (1, 2) à impulsion s'effectue à l'aide de procédés de modulation ou de configurations d'impulsion travaillant on line et/ou off line.

5. Système d'entraînement électrique ayant au moins deux convertisseurs (1, 2) à impulsion alimentés à partir d'un dispositif (4) commun d'alimentation en tension continue, pour l'alimentation d'une machine (3) électrique à champ tournant ayant au moins deux faisceaux (31, 32) d'enroulement ou au moins deux systèmes (33, 34) d'enroulement, notamment pour effectuer le procédé suivant l'une des revendications 1 à 4,
dans lequel, au moins respectivement deux des convertisseurs (1, 2) à impulsion ont une dépendance de commutation dépendant du dispositif (5) de commande, en ce que, pour les deux convertisseurs (1, 2) à impulsion, à leurs sorties (1a, 1b, 1c et 2a, 2b, 2c) les potentiels (U1a, U1b, U1c et U2a, U2b, U2c) qu'il faut pour la création de courants (Icm1, Icm2) en mode commun s'appliquent, au moins à peu près en même temps, à des faisceaux (31, 32) d'enroulement subissant des capacités (Cp31, Cp32) parasites ou à des systèmes (33, 34) d'enroulement subissant des capacités (Cp33, Cp34) parasites de la machine (3) à champ tournant, en ce que les potentiels (Uc31, Uc32 et Uc33, Uc34) de tension sont, par les capacités (Cp31, Cp32) parasites des faisceaux (31, 32) d'enroulement et par les capacités (Cp33, Cp34) parasites des systèmes (33, 34) d'enroulement, dirigés en sens opposé les uns aux autres par rapport au potentiel de terre,
**caractérisé en ce que** les deux convertisseurs (1, 2) à impulsion peuvent être commandés par un procédé de modulation à l'aide de fonctions auxiliaires triangulaires, la fonction (UΔ1) auxiliaire triangulaire de l'un des deux convertisseurs (1) à impulsion étant inversée par rapport à la fonction (UΔ2) auxiliaire triangulaire de l'autre des deux convertisseurs (2) à impulsion.

6. Système d'entraînement électrique suivant la revendication 5, dans lequel la au moins une machine (3) à champ tournant a plusieurs faisceaux (31, 32) d'enroulement, alimentés au sens d'une alimentation par un faisceau individuel, par, respectivement, un convertisseur (1 et 2) à impulsion monophasé,
**caractérisé en ce que** les deux convertisseurs (1, 2) à impulsion ont, par le dispositif (5) de commande, une dépendance de commutation, de façon à ce que les valeurs instantanées des tension (U1, U2) de sortie des deux convertisseurs (1, 2) à impulsion soient au moins à peu près les mêmes.

7. Système d'entraînement électrique suivant la revendication 5, dans lequel la au moins une machine (3) à champ tournant a plusieurs systèmes (33, 34) d'enroulement polyphasés, alimentés par, respectivement, un convertisseur (1 et 2) à impulsion polyphasé,
**caractérisé en ce que** les systèmes (33 et 34) d'enroulement, alimentés par les deux convertisseurs (1, 2) à impulsion, sont, dans la machine (3) à champ tournant, décalés les uns par rapport aux autres électriquement au moins d'à peu près 180° et les deux convertisseurs (1, 2) à impulsion ont, par le dispositif (5) de commande, une dépendance de commutation, de manière à ce que les valeurs instantanées des tensions (U1ba, U1cb, U1ac) et (U2ba, U2cb, U2ac) de sortie des, respectivement, deux convertisseurs (1, 2) à impulsion soient inversées l'une par rapport à l'autre.

8. Système (19) d'entraînement électrique suivant au moins l'une des revendications 5 à 7,
**caractérisé en ce qu'**il est prévu un dispositif (5) de commande commun des deux convertisseurs (1, 2) à impulsion.

9. Système d'entraînement électrique suivant au moins l'une des revendications 5 à 7,
**caractérisé en ce qu'**il est prévu plusieurs, notamment deux dispositifs (51, 52) de commande des deux convertisseurs (1, 2) à impulsion, séparés en technique d'appareillage et/ou fonctionnellement et combinés entre eux en technique du signal d'une manière appropriée, en étant notamment synchronisés entre eux.

10. Système d'entraînement électrique suivant au moins l'une des revendications 5 à 9,
**caractérisé en ce que** des fonctions en technique du signal du dispositif (5) de commande ou des dispositifs (51, 52) de commande sont réalisées dans au moins un module matériel programmable, notamment LCA et/ou au moyen de logiciel dans un traitement numérique du signal, par au moins un processeur numérique et/ou par du matériel habituel en technique analogique et/ou numérique.

11. Système d'entraînement électrique suivant au moins l'une des revendications 5 à 10,
**caractérisé en ce qu'**une ou plusieurs des machines (3) électriques à champ tournant sont réalisées en machines synchrones à excitation électrique ou à magnétisme permanent.

12. Système d'entraînement électrique suivant au moins l'une des revendications 5 à 10,
**caractérisé en ce qu'**une ou plusieurs des machines (3) électriques à champ tournant sont réalisées en machines asynchrones.

13. Système d'entraînement électrique suivant au moins l'une des revendications 5 à 12,
**caractérisé en ce qu'**une ou plusieurs des machines (3) électriques à champ tournant sont des entraînements de propulsion d'un bateau, notamment d'un sous-marin.

14. Utilisation du système d'entraînement électrique suivant au moins l'une des revendications 5 à 13, dans un réseau de bord électrique, notamment dans un réseau de bord électrique à courant continu sur des bateaux, notamment sur des sous-marins.
